# EUROPEAN PATENT SPECIFICATION

(11) **EP 1 533 251 B1**
(45) Date of publication and mention of the grant of the patent: **03.09.2008**
(21) Application number: 04027838.4
(22) Date of filing: 24.11.2004
(51) Int. Cl.: B65D 85/48

(54) **Packing container for flat display glass**
Verpackungsbehälter für Flachbildschirmscheibe
Emballage pour vitre d'écran plat

(30) Priority: 24.11.2003 KR 2003083781; 24.11.2003 KR 2003083780
(43) Date of publication of application: 25.05.2005
(60) Divisional application: 07117795.0
(73) Proprietor: Samsung Corning Precision Glass Co., Ltd., Gumi-si, Kyungsangbuk-do (KR)
(72) Inventor: Kim, Young Taek, Cheonan-si Chungcheongnam-do 330-220 (KR); Kim, Sung Cheal, Gumi-si Gyeongsangbuk-do 730-110 (KR); Yim, Sang Jae, Cheonan-si Chungcheongnam-do 330-090 (KR); Kim, Jung Han, Cheonan-si Chungcheongnam-do 330-762 (KR); Lee, Bum Ro, Gwanak-gu Seoul 151-831 (KR); Lee, Chung Kil, Asan-si Chungcheongnam-do 336-779 (KR); Park, Won Kyu, Cheonan-si Chungcheongnam-do 330-762 (KR); Lee, Young Ho, Gunpo-si Gyeonggi-do 435-731 (KR); Kim, Joon Hahn, Asan-si Chungcheongnam-do 336-814 (KR); Min, Lee Silk, Gangnam-gu Seoul 135-080 (KR)
(74) Representative: Bungartz, Klaus Peter

(56) References cited:
- EP-A- 0 257 219
- DE-U1- 8 107 930
- US-A- 3 964 608
- US-A- 4 010 849
- US-A- 5 678 693

## Description

The present invention generally relates to a packing container for flat display glass, and more specifically, to a packing container for flat display glass for preventing the flat display glass from being damaged or broken as a result that the arrayed flat display glass is disarranged or inclined to right and left sides owing to a vibration or shock while carrying the glass, by loading a large number of plural flat display glasses on an L-shaped frame and fixing both sides of the loaded flat display glass with a predetermined alignment.

### [Background of the Invention]

As a display gets larger, flat glass used as a substrate material of a flat display panel such as an LCD monitor panel or a plasma display panel is also getting bigger. Accordingly, when a horizontal loading method in the prior art is used to load and carry a flat display glass, it can remarkably deteriorate working efficiency while polluting or damaging the flat glass due to a reciprocal contact between flat glasses or outer pollutants.

To solve such a problem, technologies for increasing a loading efficiency while preventing flat glass from being polluted have been provided. As an example, Japan Publicized Patent No. 2000-203679(method for receiving glass plate, hereinafter called 'publicized patent') has been suggested, and this patent is illustrated in Fig. 1.

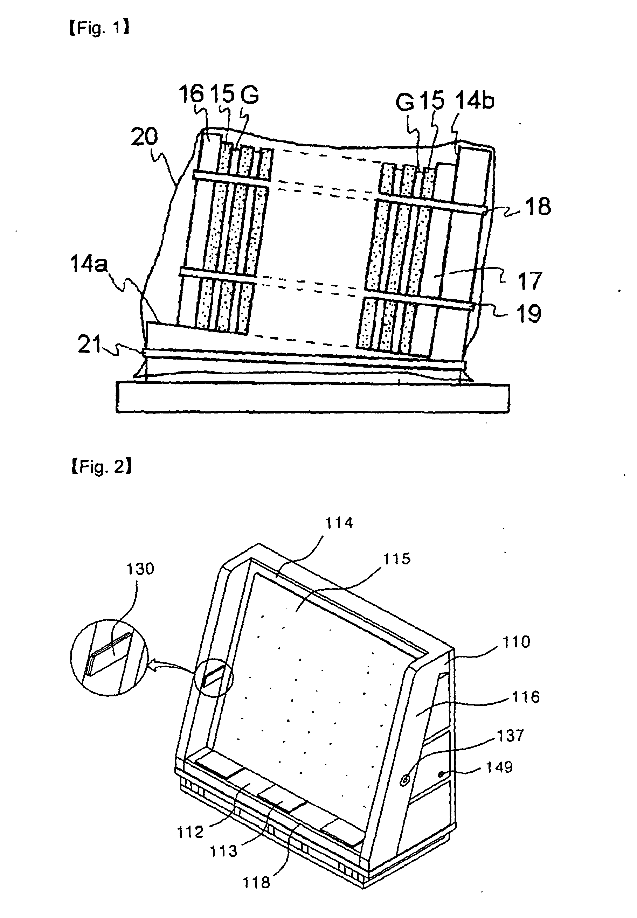

Fig. 1 is a side view of a flat glass receiver suggested in the above publicized patent. Like shown in Fig. 1, the receiver suggested in the above publicized patent is formed with a loading surface(14a) for loading flat glasses(G) in vertical direction and a backplate surface(14b) extending in vertical direction from a rear section of the loading surface on an L-shaped support. The loading surface is inclined to the backplate surface at 2 to 20 degrees, so that the plural flat glasses(G) can lean against the backplate surface(14b) to stand and be loaded. In addition, separation members(15) surrounding rim portions only of the accumulated flat glasses are inserted into rim parts of each flat glass(G) and between the flat glasses, and reinforcing plates(16,17) are disposed on a flat glass outer side located in the front line and between a flat glass located in the last line and the backplate surface(14b). Then, the separation members(15) are inserted between the flat glasses(G) and the reinforcing plates, thereby preventing the flat glasses from being polluted and damaged. Meanwhile, in the above publicized patent, rubber bands(18,19) are hooked over the reinforcing plate(16) located in the front line and the backplate surface(14b) to fix the loaded flat glasses, while covering a top thereof with a packing bag(20) to seal it by binding with a rubber band(21) again.

Moreover, when carrying the flat glasses(G), they are sealed with the packing bag(20) and carried while being covered with another box which can cover the whole, then the box and the packing bag are removed as releasing the rubber bands, to unload the loaded glasses.

However, in case of the above publicized patent, an outer packing material such as the package bag or the box for packing the loaded flat glasses should be separately managed, and furthermore, a space for loading the removed outer packing material should be obtained after carrying it. Besides, as the flat glasses get larger, the number of necessary workers is increased. As a result, a working efficiency may deteriorate and there is a risk of a worker's injury when a final packing process is manually conducted, as well as damage to the loaded flat glasses caused by a worker's mistake.

Also, in case of a packing material for the prior flat display glasses, since the flat display glasses are not firmly fixed, the loaded flat display glasses may be disarranged by a vibration or shock while being carried and can be inclined to right and left sides. So, the loaded flat display glasses may be crashed into each other or pressure is inclined to one side, damaging or breaking the flat display glasses. Thus, a technology for stably maintaining an arranged state of the side of the loaded flat display glasses is required.

### [Summary of the Invention]

The present invention is suggested to solve said problems, it is therefore an object of the present invention to provide a packing container for flat display glass which can prevent an inclination phenomenon to right and left sides by stably maintaining an arranged state of the side of loaded flat display glasses while loading and carrying the flat display glasses and can safely and effectively conduct a packing process of the loaded flat display glasses.

Furthermore the US 3 964 608 A discloses a container comprising side alignments for securing the glass. A nut is thereby secured to the shaft from the lateral member to secure disc springs on the shaft between the nut and crossmember. When the shaft rotates using nut, rigid member is movable along the guide rail. A drawback of this embodiment is that the side alignment is rigidly coupled and installed on loading area.

The DE 81 07 930 U1 discloses a packing container having an opening/shutting member that can close upper and front surface area of the loading frame.

That is, it is the object of the present invention to prevent the arranged state of the flat display glasses from being inclined to right and left sides while being carried, by fixing both sides of the loaded flat display glasses with a predetermined alignment, and to improve a working efficiency by easily packing the flat display glasses and simply removing the packing.

To accomplish the above object, a packing container for flat display glass according to claim 1 is provided.

Desirably, each alignment is composed of: a plate body being in flat plate shape, being parallel to the sidewalls, and where a first side thereof is closely adhered to one side of a flat display glass; and an adjusting member fixed to a second side of the plate body, an opposite side to the first side of the plate body, and finely adjusting a horizontal position of the plate body. In this case, the adjusting member includes a first bar configured in long bar shape and whose first section is fixed to the second side of the plate body, and a second bar configured in long bar shape and whose first section is coupled with an unfixed second section of the first bar and second section is tied to sidewalls in engaged type, then screw grooves are formed in a coupled part of the first bar and the second bar, respectively. Furthermore, a first insertion hole is comprised, in which a sidewall is pierced on the right and left sides in predetermined diameter on a horizontal extending line of the second bar, and the adjusting member further comprises a first lever whose one section is tied to the second section of the second bar by being inserted into the first insertion hole and rotating the second bar by transmitting a rotational force to the second bar with an outer force. And, each alignment further comprises at least one supporting member whose first section is fixed to the second side of the plate body and a second section is tied to inner sides of sidewalls to support the plate body, thereby maintaining a parallel state between the plate body and the sidewalls. At this time, each supporting member comprises a supporting bar configured in long bar shape and a first section thereof being fixed to the second side of the plate body, and a supporting pipe configured in pipe shape where both sections thereof are open while being pierced inside, and an unfixed second section of the supporting bar is inserted into the open first section of the supporting pipe, then the second section of the supporting pipe fixed to the inner sides of the sidewalls while being spaced at certain intervals, and an entire length of supporting member is varied while the supporting bar moves in horizontal direction along the supporting pipes according to a position of the finely adjusted plate body. In addition, the opening/shutting member comprises: plural rollers configured in cylinder shape, the rollers closely disposed to the inner sides of the right and left sidewalls of the loading frame, and the rollers installed on an upper end and a lower end of the right and left sidewalls in horizontal direction, respectively; a series of right/left chains rotating in vertical direction with rotational forces of each roller by being wound and fixed to right and left sections of each roller in a structure of covering each roller and the backplate surface together; and plural shutter plates configured in long piece shape, the shutter plates being closely adhered to each other while both sections of the shutter plates being fixed to the right and left chains, and the shutter plates covering at least the open front surface and front surface areas of the loading frame, and a pierced hole is included in a front section of the loading surface, the pierced hole being upper and lower pierced such that the right and left chains can pass through. At this point, the opening/shutting member further comprises a first gear disposed inside one sidewall of the loading frame and generating a vertical rotational force by receiving an outer force, and a rotational force transmission member transmitting the vertical rotational force of the first gear to the rollers such that the rollers can rotate in vertical direction by interworking at least one of the rollers with the first gear. The rotational force transmission member includes a second gear converting the vertical rotational force of the first gear into a horizontal rotational force in gear with the first gear, and a third gear converting the horizontal rotational force of the second gear into a vertical rotational force in gear with the second gear and transmitting the vertical rotational force to the rollers in gear with one of the rollers, or includes a belt wound between one of the rollers and the first gear to be fixed. In addition, a second insertion hole is further comprised, in which a sidewall is pierced on the right and left sides in predetermined diameter on a horizontal extending line of the first gear. And the opening/shutting member further comprises a second lever whose one section is inserted into the second insertion hole to be tied to the first gear and transmitting the rotational force caused by the outer force to the first gear.

Another embodiment of a packing container for flat display glass that is not part of the present invention is characterized by a packing container for flat display glass for vertically loading and packing plural flat display glasses, comprising: a loading frame where the flat display glasses are loaded; right/left alignments mounted on lower sides, right/left side portions of the loading frame located under a loading surface of the loading frame, and fixing/supporting both sides of the loaded flat display glasses by horizontal positions of the right/left alignments being finely adjusted, respectively; and an opening/shutting member opening/shutting an open area of the loading frame; and wherein the loading frame, comprising: the loading surface supporting lower ends of each loaded flat display glass; and a backplate surface formed in a rear section of the loading surface to be vertical to the loading surface, and supporting a rear side of each flat display glass.

Desirably, each alignment is composed of: a plate body configured in flat plate shape, and whose first side is mounted as maintaining a parallel state with a lower side of the loading surface; and an adjusting member inserted into a first insertion hole of the plate body, and in which a first section thereof is fixed to the lower side of the loading surface to finely adjust a horizontal position of the plate body; and wherein the plate body is divided into a lower area and an upper surface area by a horizontal extending line of the loading surface, and a first insertion hole pierced on the right and left sides is comprised in the lower area. At this moment, the plate body consists of: a first plate body whose first side is parallel to the lower side of the loading surface, the first plate body being mounted under the horizontal extending line of the loading surface, and the first plate body including the first insertion hole; a second plate body exposed to a top of the horizontal extending line of the loading surface by being mounted in an upper section of the first plate body, and in which a first side of the second plate body is closely adhered to one side of a flat display glass; and hinges fixed to a second side, an opposite side of the first side of the first plate body and the second plate body, and the hinges foldably connecting the first plate body with the second plate body. Then, the second plate body is folded in a direction opposite to the loading surface. On this occasion, the plate body further comprises fixing holes vertically pierced on a second side of the first plate body, and a fixing bar supporting the second side of the second plate body by being inserted into the fixing holes in vertical direction. Likewise, the adjusting member is composed of: an adjusting pipe configured in pipe shape being pierced inside and both sections thereof being open, the adjusting pipe inserted/mounted into and on the first insertion hole, and the adjusting pipe formed with a screw groove on an inner side of the adjusting pipe; and an adjusting bar configured in long bar shape, the adjusting bar inserted/mounted into and on the adjusting pipe while a first section thereof is fixed to a lower side of the loading surface, and the adjusting bar formed with a screw groove along an outer circumference. Then, the screw groove of the adjusting bar is reciprocally coupled with the screw groove of the adjusting pipe. Besides, more than one second insertion hole is further comprised, in which the plate body is pierced on the right and left sides in the lower area, and each alignment further comprises at least one supporting member configured in long bar shape, the supporting member inserted into the second insertion hole, respectively, while a first section of the supporting member is fixed to the lower side of the loading surface, the supporting member supporting a horizontal movement of the plate body, and the supporting member maintaining a parallel state between the first plate body and the lower side of the loading surface. On the other hand, the opening/shutting member comprises right/left front doors consisting of plural door parts connected to each other, and each door part opening/shutting an open front surface area of the loading frame while being foldably opened/shut; right/left side doors wherein the folded door parts of the right/left front doors are folded while rotating, respectively, and the right/left side doors opening/shutting an open side area of the loading frame while sliding in front and rear directions, and upper door fixed to upper sections of the right/left side doors, upper door sliding in front and rear directions along the right/left side doors, and upper door opening/shutting an open upper surface area of the loading frame. At this point, the loading frame further comprises right/left first rail portions formed on at least an outer side rather than the right/left alignments among areas where the loading surface is extended in horizontal direction, and second rail portions formed in both side portions of the backplate surface. And each of the right/left side doors comprises first coupling portions coupled with the first rail portions by being formed in a lower section and second coupling portions coupled with the second rail portions by being formed on one side opposite to each other. Then, the right/left side doors slide in front and rear directions along the first rail portions and the second rail portions.

### [Brief Description of the Drawings]

Fig. 1 is a side view of a flat glass receiver suggested in Japan Publicized Patent No. 2000-203679.
Fig. 2 is a perspective view of a packing container for flat display glass in accordance with the present invention.
Fig. 3 is a state diagram showing that a packing container for flat display glass in accordance with the present invention is used.
Fig. 4 is a diagram for illustrating an operation of an opening/shutting member of a packing container for flat display glass in accordance with the present invention.
Fig. 5 is a perspective view of alignment in accordance with the present invention.
Fig. 6 is a sectional view for illustrating operations of alignment in accordance with the present invention.
Fig. 7 is a perspective view of another embodiment of a packing container for flat display glass that is not part of the present invention.
Fig. 8 is a side view for illustrating an operation of another embodiment of a packing container for flat display glass .
Fig. 9 is a perspective view of another embodiment of alignments.
Fig. 10 is a sectional view for illustrating operations of another embodiment of alignments.

### [Detailed Description of the Preferred Embodiments]

The present invention will now be described in detail with reference to exemplary preferred embodiments as illustrated in the accompanying drawings.

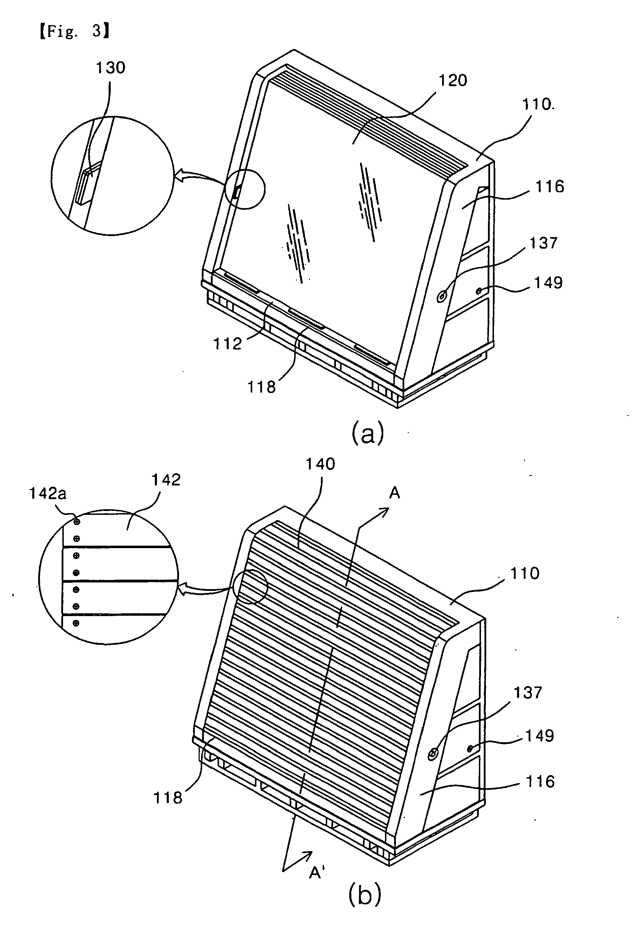

Fig. 2 is a perspective view of a packing container for flat display glass in accordance with the present invention. Also, Fig. 3 is a state diagram showing that a packing container for flat display glass in accordance with the present invention is used, Fig. 3(a) illustrates that flat display glasses are loaded into a packing container for flat display glass in accordance with the present invention, and Fig. 3(b) illustrates that an open area of a loading frame is closed by closing an opening/shutting member of a packing container for flat display glass in accordance with the present invention. Referring to Fig. 2 and Fig. 3, a configuration of the packing container for flat display glass in accordance with the present invention will be described as follows.

A packing container(100) for flat display glass in accordance with the present invention comprises: a loading frame(110) forming a space for loading flat display glasses, and in which a loading surface(112) and a backplate surface(114) are vertically disposed; alignments(130) fixing both sides of loaded flat display glasses(120); and an opening/shutting member(140) opening and shutting an open area of the loading frame. Also, the packing container for the flat display glasses(100) in accordance with the present invention can further comprise reinforcing materials(not shown). The reinforcing materials are disposed in front of the loaded flat display glasses, protecting the flat display glasses(120) from outer shock.

The loading frame(110) in accordance with the present invention forms a space where the flat display glasses are loaded, forming a basic frame of the packing container(100) for flat display glass. The loading frame(110) consists of the loading surface(112), the backplate surface(114), and right/left sidewalls(116). The loading surface(112) is horizontally formed in a lower section of the loading frame, while the backplate surface(114) is vertically formed in a rear side part of the loading frame. That is to say, the loading surface(112) and the backplate surface(114) constitute an L shape to be perpendicular to each other. Also, the right/left sidewalls(116) are formed by connecting both side sections of the loading surface and the backplate surface, intercepting side areas of the loading frame(110). Lower ends and rear sides of the flat display glasses(120) loaded into the loading frame(110) are supported by the loading surface and the backplate surface, respectively. Desirably, buffer materials(113,115) are attached to an upper surface of the loading surface(112) and a front portion of the backplate surface(114) contacted with the flat display glasses(120), thereby buffering self loads of the flat display glasses and an outer vibration or shock. Certainly, buffer materials(not shown) can be attached to inner sides of the right/left sidewalls(116).

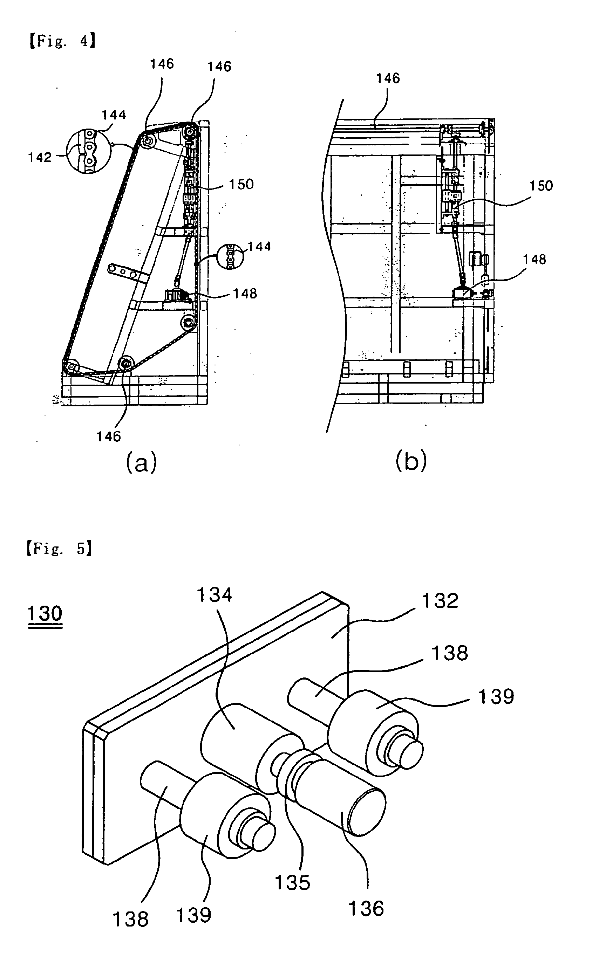

The alignments(130) in accordance with the present invention are used to fix both sides of the loaded flat display glasses(120), being horizontally configured in pairs on the inner sides of the right/left sidewalls(116) of the loading frame(110). At this time, the paired alignments(130) are disposed in the same horizontal extending line, so that balanced pressure can be applied to the loaded flat display glasses(120). Each alignment(130) is closely adhered to one side of the loaded flat display glasses by finely adjusting a horizontal position with a predetermined first lever from an outer side of the sidewalls(116) of the loading frame(110). Likewise, it is desirable to comprise at least more than one pair of the alignments(130) to stably fix both sides of the loaded flat display glasses(120). A configuration and operations of the alignments will be more fully described in Fig. 5.

Meanwhile, another fixing device(not shown) can be further comprised to fix the flat display glasses(120) separately loaded from the alignments(130) to the loading frame(110). In this case, it is desirable to configure the fixing device to be integratedly fixed to the loading frame(110), and a clamp type or a belt type having a buckle or a hook in one section can be configured as well.

The opening/shutting member(140) in accordance with the present invention opens/shuts an open area of the loading frame(110), more specifically, an upper surface and a front surface of the loading frame, protecting the loaded flat display glasses(120) from an outer physical shock. The packing container(100) for flat display glass in accordance with the present invention uses a series of shutters(hereinafter, called 'rolling shutter') rotating in vertical direction along the loading frame(110) while covering the entire backplate surface(114) with the opening/shutting member(140). A configuration and operations of the rolling shutter will be described in reference to Fig. 4.

Fig. 4 is a diagram for illustrating an operation of an opening/shutting member of a packing container for flat display glass in accordance with the present invention, Fig. 4(a) is a sectional view of A-A' direction of Fig. 3(a), that is, it illustrates the packing container for flat display glass in accordance with the present invention seen from a right side, and Fig. 4(b) is a sectional view illustrating the packing container for flat display glass in accordance with the present invention seen from a front side. Referring to Fig. 4(a) and Fig. 4(b), a configuration and operations of the opening/shutting member, that is, a rolling shutter will be described as follows.

A rolling shutter(140) in accordance with the present invention is comprised by being closely disposed to an inner side of right/left sidewalls(116) of a loading frame(110), covering a backplate surface(114) in front and rear directions. The rolling shutter(140) comprises: plural cylinder-shaped rollers(146) in which both sections thereof are closely disposed to inner sides of the right/left sidewalls(116) of the loading frame(110), and being installed on at least an upper end and a lower end of the right/left sidewalls in horizontal direction; a series of chains(144) covering the backplate surface(116) together with each roller, and being wound/fixed on and to right/left sections of the rollers, respectively; plural shutter plates(142) mounted in certain areas of said chains; a first gear(148) generating a rotational force by receiving an outer force; and a rotational force transmission member(150) transmitting the rotational force of the first gear to the rollers.

The rollers(146) in accordance with the present invention are used to rotate the chains(144) by receiving an outer rotational force, being disposed in horizontal direction inside the loading frame(110). More specifically, both sections of each roller(146) are closely disposed or mounted to an inner side of the right/left sidewalls(116) of the loading frame, that is, the each inner side faces each other. And the rollers are comprised on at least an upper end and a lower end of the loading frame(110) for a smooth rotation of the chains(144). Besides, each roller(146) is in cylinder shape whose sections are round-shaped. Meanwhile, both sections of each roller(146) where the chains(144) are coupled can be formed in saw tooth shape. In this case, it can prevent the rollers from skidding or the chains from sliding by transmitting rotational forces of each roller to the chains without any loss.

The chains(144) in accordance with the present invention rotate in vertical direction while being wound on each roller(146), being mounted as covering the backplate surface(114) of the loading frame(110) together with each roller. The chains(144) are configured in pairs on the right and the left, being mounted in right and left sections of each roller(146), respectively. Hence, each chain(144) on the right and the left is closely disposed to each inner side of right/left sidewalls(116) and the each inner side faces each other. Desirably, in order to prevent the flat display glasses(120) from being contacted with or hooked over the chains(144) while being loaded on or unloaded, a sufficient space between the chains and a loading area of the flat display glasses is necessary.

The shutter plates(142) in accordance with the present invention are in long and thin piece shape, being mounted in certain areas of the right/left chains(144) to cover an open area of the loading frame(110). The shutter plates(142) are comprised in plural to sufficiently cover front surface and upper surface areas of the loading frame(110), and each shutter plate is closely disposed to each other while both sections thereof are fixed to the right/left chains(144). Advisably, both sections of each shutter plate(142) should be fixed to the chains(144) by using coupling means(142a) such as screws. Therefore, the rolling shutter(140) in accordance with the present invention is disposed with the plural shutter plates(142) in the front surface and upper surface areas of the loading frame(110) while the chains(144) only are disposed in rear side and lower side areas, and opens/shuts the front surface and upper surface areas of the loading frame by moving parts where the shutter plates are mounted with a vertical rotation of the chains.

On the other hand, the rolling shutter(140) passes through a loading surface(112) to freely move in vertical direction while being connected to each other. Accordingly, a pierced hole(118) is formed in a front section of the loading surface(112) such that the rolling shutter(140) can pass through. At this time, to prevent the rolling shutter(140) from being hooked over the pierced hole(118), a right/left width of the pierced hole is formed to be at least identical with a width of the rolling shutter(140), and a front/rear width thereof is formed to be at least identical with the added thickness of the shutter plates(142) and the chains(144). In the meantime, unlike the above configuration, the pierced hole can be formed to pass through the chains only, instead of a combination of the chains(144) and the shutter plates(142). On this occasion, two pierced holes having a size of passing through the right/left chains(144) are comprised on the right and the left of a front section of the loading surface(112). Accordingly, a front surface and an upper surface of the loading frame(110) are opened by lifting up the rolling shutter(140), whereas the front surface and the upper surface of the loading frame are closed with a series of the shutter plates(142) by lifting down the rolling shutter again.

The first gear(148) in accordance with the present invention rotates the rollers(146) by generating a certain rotational force with a received outer force, being comprised inside one sidewall(116) of the loading frame(110). In this case, a direction of the rotational force should be a vertical direction identical with a rotational direction of the rollers(146). The rotational force generated by the first gear(148) is transmitted to the rollers by the rotational force transmission member(150).

The rotational force transmission member(150) transmits the rotational force of the first gear to the roller by reciprocally interworking the first gear(148) with at least one of the rollers(146), so that the rollers can rotate in vertical direction. It is possible to configure the rotational force transmission member in plural gears(gear type) or in belt form(belt type). In case of the gear type, the rotational force transmission member(150) includes more than one second gear and a third gear. The second gear is geared into the first gear(148), and converts the vertical rotational force generated from the first gear into a horizontal rotational force. The third gear is geared into the second gear, and converts the horizontal rotational force of the second gear into the vertical rotational force again. And, the third gear transmits the converted vertical rotational force in gear with one of the rollers. Also, in case of the belt type, the rotational force transmission member(150) includes a belt wound between the first gear(148) and one of the rollers(146) to interwork the first gear with the rollers. Certainly, the rotational force transmission member(150) can have a mixed type of the belt and the gears.

Meanwhile, an outer force should be transmitted to the first gear to rotate the first gear(148). At this time, the outer force is generated by a user or a predetermined motor. That is to say, the user rotates the first gear(148) by using a predetermined second lever(not shown) or rotates the first gear with the motor by connecting a driving shaft of the motor(not shown) with the first gear. So, a second insertion hole(149) pierced on the right and the left in predetermined diameter should be formed in a horizontal extending line of the first gear(148) of the one sidewall(116). Therefore, when the user rotates the first gear(148), the first gear rotates after coupling the first gear and an inserted section of the second lever by inserting the predetermined second lever through the second insertion hole(149). In addition, when the motor is used, the driving shaft is coupled with the first gear(148) by inserting the driving shaft of the motor, thereby rotating the first gear.

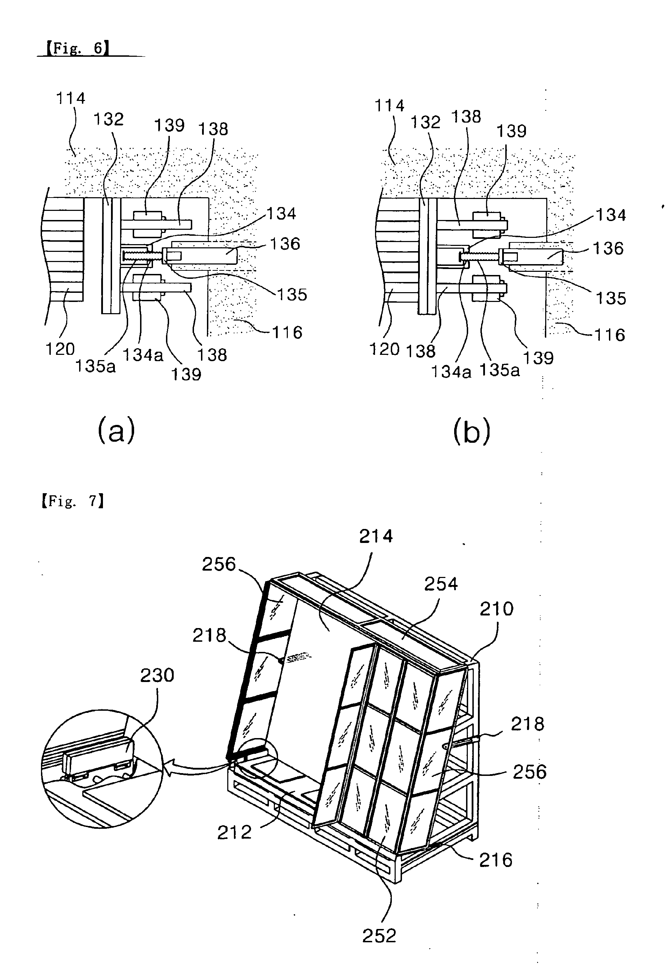

Fig. 5 is a perspective view of alignment in accordance with the present invention, and Fig. 6 is a section view for illustrating operations of alignment in accordance with the present invention. Fig. 6(a) is a sectional view showing that alignment in accordance with the present invention isn't closely adhered to flat display glasses, and Fig. 6(b) is a sectional view showing that alignment in accordance with the present invention is closely adhered to flat display glasses. Also, Fig. 6(a) and Fig. 6(b) illustrate that the alignment are seen from the top to clearly show the operations of the alignment. Referring to Fig. 5 and Fig. 6, a configuration and the operations of the alignments in accordance with the present invention will be described as follows.

Alignments(130) are disposed on the right and the left of inner sides of right/left sidewalls(116) of a loading frame(110) in pairs, and are fix/support flat display glasses by closely adhering both sides of flat display glasses(120) loaded on the loading frame by finely adjusting horizontal positions. Like shown above, the alignments(130) are comprised on the right and the left at least in pairs, and the two paired alignments are horizontally disposed in the same extending line. Each alignment(130) comprises a plate body(132) closely adhered to one side of the flat display glasses(120), adjusting member(134,135) for finely adjusting a horizontal position of the plate body, and at least one supporting member(138,139) for maintaining a parallel state between the plate body and the sidewalls(116).

The plate body(132) in accordance with the present invention is in flat plate shape, maintaining the parallel state with the sidewalls(116) of the loading frame(110). The horizontal position of the plate body(132) is finely adjusted by the adjusting member(134,135), and the plate body maintains the parallel state with the sidewalls(116) while moving in horizontal direction by the adjusting member(134,135). Besides, a buffer material can be attached to a first side of the plate body(132) contacted with one side of the flat display glasses(120) to prevent the flat display glasses from being damaged.

The adjusting member(134,135) in accordance with the present invention finely adjust the horizontal position of the plate body(132), including the first bar(134) fixed to the plate body and the second bar(135) tied to the first bar. The first bar(134) is in long bar shape, and in which a first section thereof is fixed to a second side, an opposite side to a first side of the plate body(132). And, a first section of the second bar(135) is coupled with an unfixed second section of the first bar(134). At this time, screw grooves(134a,135a) are formed in a coupled part of the first bar and the second bar. Then, an uncoupled second section of the second bar(135) is tied to the sidewall(116), to rotate only without moving in horizontal direction. Thus, the second bar(135) horizontally moves the first bar(134) along the screw grooves(134a,135a) while rotating, and the plate body(132) fixed with the first bar finely moves on the right and the left. Meanwhile, one section of a first lever(136) for rotating the second bar is tied to the uncoupled second section of the second bar(135). In addition, a first insertion hole(137) pierced on the right and the left in predetermined diameter is included in a horizontal extending line of the second bar(135) among the sidewalls(116) of the loading frame(110). Therefore, a position of the plate body(132) can be adjusted by rotating the second bar when a user turns the first lever by inserting the first lever(136) through the first insertion hole(137) outside the sidewalls(116) of the loading frame(110) to couple the lever with the second bar(135). On the other hand, the first lever(136) can be coupled with the second bar(135). In this case, the first lever rotates only without moving in horizontal direction by being tied to the sidewall(116).

The supporting members(138,139) in accordance with the present invention are fixed to the plate body(132), and prevent the plate body from shaking while moving in horizontal direction or the parallel state with the sidewalls(116) from being deviated, including the supporting bar(138) fixed to the plate body(132) and supporting pipe(139) covering an outer circumference of the supporting bar. The supporting bar(138) is in long bar shape, and in which a first section thereof is fixed to said second side of the plate body(132). The supporting pipe(139) is pierced inside, and in which both sections thereof are in open pipe shape while an unfixed second section of the supporting bar(138) is inserted through an open first section. The supporting pipe(139) is fixed to inner side of the sidewall(116) of the loading frame(110), and the second section of the supporting pipe is spaced from the inner side of the sidewall of the loading frame at certain intervals. A coupled surface of the supporting bar(138) and the supporting pipe(139) is in smooth type where screw grooves are not formed. Accordingly, the supporting bar(138) moves in horizontal direction along the supporting pipe(139) according to the horizontal direction of the plate body(132). More specifically, like shown in Fig. 6(a) and Fig. 6(b), the supporting bar(138) comes out by being exposed to first sectional side of the supporting pipe(139) or comes into a space between the supporting pipe(139) and the sidewall(116). In this case, a maximum mobile range of the supporting bar(138) is equal to a sum of a length of the supporting pipe(139) and a width of said space. Meanwhile, unlike the above configuration, second section of the supporting pipe(139) can be fixed to inner side of the sidewall(116), and the supporting bar(138) may be inserted or exposed inside the supporting pipe. At this point, a right/left mobile range of the supporting bar(138) is equal to a maximum length of the supporting pipe(139).

Now, a process for loading and carrying flat display glasses by using a packing container for the flat display glass in accordance with the present invention will be described below.

To carry the flat display glasses(120) which have been fully inspected in a clean room, they are loaded on the loading frame(110). Concretely, lower ends of the flat display glasses(120) are supported by a loading surface(112), and rear sides thereof lean against a backplate surface(114) to be supported. On this occasion, separation materials can be inserted between the loaded flat display glasses(120). After loading all the flat display glasses(120), reinforcing material is loaded in front of the flat display glasses loaded in the front line.

Next, both sides of the loaded flat display glasses(120) are fixed by finely adjusting positions of the right/left alignments(130). Specifically, the first levers are turned in certain direction(ex: clockwise direction) after tying the first levers(136) to the second bars(135) of the adjusting members by inserting the first levers through the first insertion holes(137). The second bars(135) are separated from the first bars(134) while rotating. Since the second bars(135) don't move in horizontal direction, the first bars move in inner direction of the loading frame(110). Thus, the plate bodies(132) are closely adhered to one side of the flat display glasses(120). Said plate bodies(132) move by the screw grooves(134a,135a) of the first bars(134) and the second bars(135), so the horizontal position can be finely adjusted. As a result, they can be perfectly adhered to the one side of the flat display glasses(120), and prevent shock or excessive pressure from being applied to the flat display glasses during an alignment adjustment. On the other hand, when another flat glass fixing device is comprised except the alignments(130), the loaded flat display glasses are fixed by using said fixing device.

When the flat display glasses(120) are fully loaded while the alignments(130) are perfectly adjusted, a second lever or a driving shaft of a predetermined motor is inserted into a second insertion hole(149) to be tied to a first gear(148), and rotates the first gear in vertical direction. A rotational force of the first gear(148) is transmitted to rollers(146) through a rotational force transmission member(150), and chains(144) move in certain direction while the rollers rotate in vertical direction. Therefore, a part where shutter plates(142) are mounted moves to upper surface and front surface areas of the loading frame(110), thereby shutting the open area of the loading frame.

When the flat display glasses(120) are fully loaded and packed, the packing container(100) for the flat display glasses is carried to a carrying place.

Then, in order to unload the loaded flat display glasses(120), the second lever or the driving shaft of the motor is inserted through the second insertion hole(149) to be tied to the first gear(148), and the first gear is rotated. A rotational force of the first gear(148) is transmitted to the rollers(146) to move the chains. Accordingly, a part where the shutter plates(142) are not mounted, that is, a part where the right/left chains(144) only are mounted moves to the front surface and the upper surface of the loading frame(110) to open the loading frame.

Next, when the first levers(136) are inserted into the first insertion holes(137) to be tied to the second bars(135) of the adjusting members and are rotated in opposite direction(ex: counterclockwise direction), the second bars fasten the first bars(134). Like above, since the second bars(135) don't move in horizontal direction, the first bars(134) move in outer direction of the loading frame(110). Thus, the plate bodies(132) are spaced from one side of the flat display glasses(120) at certain intervals, to release a fixed state of the flat display glasses.

Then, after taking out reinforcing material, the flat display glasses(120) are unloaded one by one.

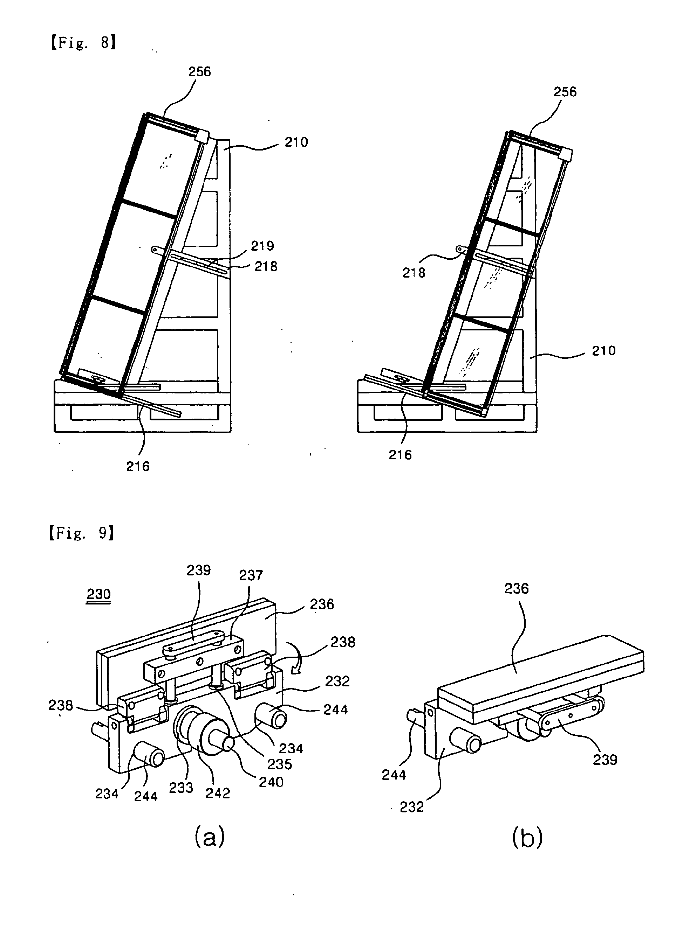

Fig. 7 is a perspective view of another embodiment of a packing container for flat display glass that is not part of the present invention, and Fig. 8 is a side view showing an operation of another embodiment of a packing container for flat display glass. Fig. 8(a) is a diagram illustrating that side doors are closed, and Fig. 8(b) is a diagram illustrating that side doors are open. Like shown in Fig. 7 and Fig. 8, another embodiment of the packing container for flat display glass uses foldably and slidingly open/shut doors with an opening/shutting member. Hereinafter, another embodiment of the packing container for flat display glass in will be described in reference to Fig. 7 and Fig. 8, while omitting the parts overlapped with the above explanations.

Another embodiment(200) of the packing container for flat display glass includes a loading frame(210) forming a space for loading loaded flat display glasses(220), right/left alignments(230) fixing both sides of the loaded flat display glasses, and opening/shutting members(252,254,256) opening/shutting an open area of the loading frame.

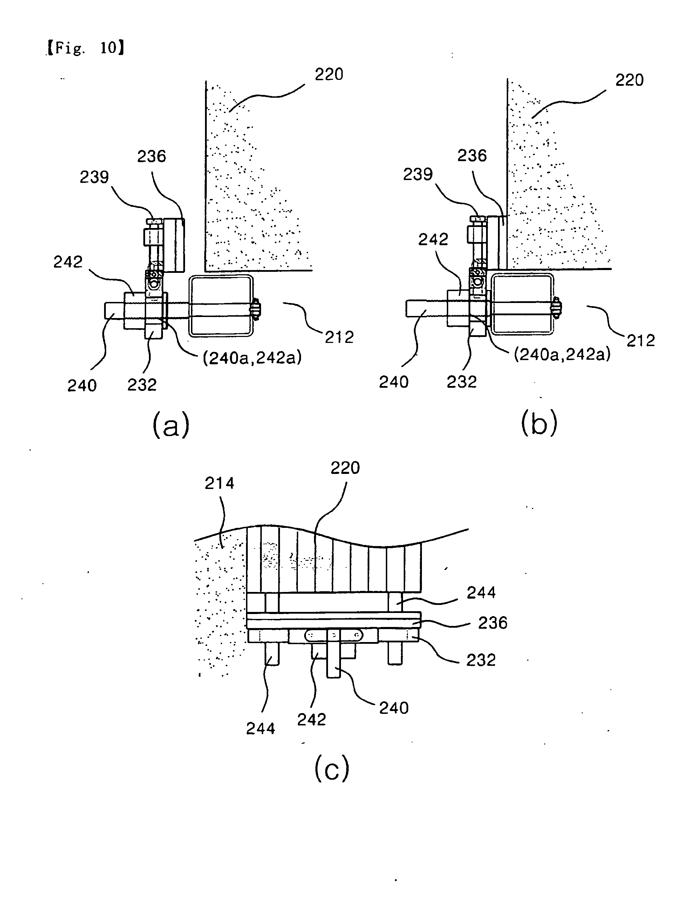

The loading frame(210) is used to load the flat display glasses(220), consisting of a loading surface(212) supporting lower sections of the flat display glasses and a backplate surface(214) supporting rear sections of the flat display glasses. Namely, the loading frame(210) of another embodiment(200) of the packing container for flat display glass does not comprise right/left sidewalls. Like above, the loading surface and the backplate surface vertically form an L shape with each other. Meanwhile, since the loading frame(210) does not comprise the right/left sidewalls, the alignments(230) are mounted on the right and the left of the loading surface(212). Specifically, the right/left alignments(230) are mounted on right/left side portions(hereinafter, called 'lower sides of the loading surface') of the loading frame, which are located under the loading surface(212), respectively, and at least certain area of said alignments is protruded upward the loading surface. Thus, the right/left alignments(230) firmly fix lower areas of both sides of the loaded flat display glasses(220). A configuration and operations of the alignments(230) will be more fully described through the explanations of Fig. 9 and Fig. 10 below.

The opening/shutting members(252,254,256) open and shut the opened areas of the loading frame(210), that is, front, upper, and both side areas of the loading frame. The opening/shutting members are composed of the right/left front doors(252) for opening/shutting the opened front surface of the loading frame, the right/left side doors(256) for opening/shutting both sides of the loading frame, and the upper door(254) for opening/shutting the upper surface of the loading frame. The right/left front doors(252) are reciprocally connected with the right/left side doors(256), and right/left sections of the upper door(254) are fixed to upper sections of the right/left side doors. That is, the upper door(254) and the right/left side doors(256) vertically form an integrated '⊏' shape, and accordingly, the upper door is open/shut along the side doors.

The right/left front doors(252) consist of plural door parts connected to each other, and the door parts are connected to the right/left side doors(256), respectively. That is to say, the right/left front doors and the side doors are composed of a series of door parts connected to each other. At this moment, each door part is connected to adjacent door parts through a predetermined link and a hinge. The front doors(252) open and shut each door part in foldable way. More specifically, they reciprocally overlap the adjacent door parts with each other to the outside from the inside, thereby opening the front surface area of the loading frame(210). After folding all the door parts of each front door(252), the folded entire door parts are overlapped and folded on the right/left side doors(256), respectively. In case of Fig. 7, it shows that the left front doors(252) are perfectly folded and overlapped with the side doors(256). In the meantime, so as to reciprocally couple the right/left front doors after shutting the front doors(252), another locking means can be further comprised.

The right/left side doors(256) slide in front and rear directions while each door part of the front doors(252) is folded, and open and shut both sides of the loading frame(210). Like shown above, since right/left sections of the upper doors(254) are integratedly fixed to upper sections of the right/left side doors, an upper side area of the loading frame(210) is also open and shut by the front and rear sliding of the side doors. So that the right/left side doors(256) can slide in front and rear directions, the loading frame(210) should comprise predetermined rail portions while the side doors are tied to each rail portion. A more specific explanation will be as follows.

The loading frame(210) comprises first rail portions(216) formed in front and rear directions of right/left extending lines of the loading surface(212), and second rail portions(218) formed in front and rear directions as well in both side portions of the backplate surface(214). Each of the first rail portions(216) has concave groove portions(not shown) formed in front and rear direction in upper surface areas. Likewise, the right/left second rail portions(218) have concave groove portions(219) formed in front and rear directions on outer sides, that is, opposite sides of facing sides. Meanwhile, since the alignments(230) are mounted in right/left sections of the loading surface(212), the first rail portions(216) are formed in positions spaced from the right/left sections of the loading surface(212) at certain intervals, and are formed on at least more outer sides than the right/left alignments. In the end, the right/left side doors(256) are disposed as covering the outside of the right/left alignments(230).

The right/left side doors(256) comprise coupling members tied to the first rail portions(216) and the second rail portions(218), having first coupling members(not shown) tied to the first rail portions in lower sections of each side door. In addition, second coupling members(not shown) are comprised on facing sides of each side door(256). Each coupling member is in protruded projection type with a predetermined size, and wherein the first coupling members are tied to concave groove portions of the first rail portions(216) and the second coupling members are tied to the concave groove portions(219) of the second rail portions(218).

Ultimately, the right/left side doors(256) slide in front and rear directions while each coupling member is coupled with each of the rail portions(216,218). Also, since the side portions as well as the lower sections of each side door are supported by the first rail portions and the second rail portions, each side door can be stably fixed to the loading frame(210) and its front/rear movements may be stably supported as well.

On the other hand, even though each rail portion comprises the concave groove portions and the coupling members with projections are formed on each side door in the above configuration, each rail portion can be in predetermined projection shape unlike the above configuration while the coupling members of each side door are in concave groove type for tying the projections.

Fig. 9 is a perspective view of another embodiment of alignments, Fig. 9(a) is a perspective view showing that another embodiment of the alignments is folded, and Fig. 9(b) is a perspective view showing that another embodiment of the alignments is unfolded. Moreover, Fig. 10 is a sectional view for illustrating an operation of another embodiment of alignments, and Fig. 10(a) and Fig. 10(c) are diagrams illustrating that the alignments are not closely adhered to flat display glasses, then Fig. 10(b) is a diagram illustrating that the alignments are closely adhered to the flat display glasses. The Fig. 10(a) and Fig. 10(b) are sectional views of the alignments seen from the top, and Fig. 10(c) is a sectional view of the alignments seen from the front. Referring to Fig. 9 and Fig. 10, a configuration and an operation of another embodiment of the alignments will be described as follows.

Another embodiment(230) of the alignments is mounted on right/left lower sides of a loading surface(212), and in which certain areas thereof are exposed upward the loading surface, and their horizontal positions are finely adjusted while maintaining a parallel state with the lower sides of the loading surface. So another embodiment(230) of the alignments fixes and supports the lower areas on both sides of flat display glasses(220) to be loaded. Each alignment(230) comprises plate bodies(232,236) sticking to one side of the flat display glasses(220), adjusting member(240,242) for finely adjusting horizontal positions of the plate bodies, and more than one supporting member(244) for supporting horizontal movements of the plate bodies and maintaining a parallel state between the plate bodies and a lower side of the loading surface(212). Hence, each alignment(230) is fixed to the lower side of the loading surface(212) with the supporting members and the adjusting member, finely adjusting its horizontal position by the adjusting member.

The plate bodies(232,236) are configured in flat plate shape, and in which first sides thereof, being opposite to each other, are closely adhered to one side of the flat display glasses(220). At this point, in another embodiment(200) of the packing container for flat display glass , a side area of the loading frame(210) is open and shut while the side doors(256) slide in front and rear directions, and in another embodiment(230) of the alignments, certain areas of each plate body are exposed upward the loading surface(212). Therefore, to easily load and unload the flat display glasses(220), it is desirable to form the plate bodies in lean backwards structure. In other words, while loading and unloading the flat display glasses(220), the flat display glasses can be loaded toward an open side area as well as a front surface area of the loading frame(210) by pulling back the plate bodies(232,236). Also, it can prevent the flat display glasses from being damaged or broken owing to a crash into the right/left alignments(230).

The plate bodies comprise: a first plate body(232) whose first side is mounted in parallel with a lower side of the loading surface(212); a second plate body(236) mounted on an upper end of the first plate body, and exposed upward the loading surface; and more than one hinge(238) for connecting the first plate body with the second plate body.

The first plate body(232) is in flat plate shape, and in which the first side, that is, a side toward the loading surface(212) is mounted on the lower side of the loading surface in parallel with one side of the lower side of the loading surface. Namely, the first plate body(232) is mounted in a lower area of a horizontal extending line of the loading surface(212) by supporting members(244) and adjusting member(240,242). Desirably, an upper section of the first plate body(232) and the horizontal extending line of the loading surface(212) should be located in the same line. The first plate body(232) consists of a first insertion hole(233) and more than one second insertion hole(234) pierced on the right and the left such that the supporting members and the adjusting member can be mounted.

The second plate body(236) is in flat plate shape, being mounted on an upper section of the first plate body(232). Hence, the second plate body(236) is disposed on top of the horizontal extending line of the loading surface(212), and in which a first side of the second plate body, that is, a side toward the loading surface is closely adhered to one side of the flat display glasses(220).

The hinges(238) are used to reciprocally connect the first plate body(232) with the second plate body(236), being mounted on the second side of the first plate body and the second plate body, respectively, and the second side is an opposite side to the first side of the first plate body and the second plate body. In order to stably maintain a connected state between the first plate body(232) and the second plate body(236), the hinges(238) should be comprised in at least more than two. Because the first plate body and the second plate body are foldably connected together by the hinges, the second plate body(236) can be pulled back in opposite direction of the loading surface(212) while being supported by the first plate body(232). Thus, the second plate body(236) is unfolded while fixing the flat display glasses(220), and both side portions of the loading surface(212) can be perfectly opened by pulling back the second plate body in opposite direction when loading or unloading the flat display glasses.

Meanwhile, to prevent the second plate body from being pulled back in opposite direction when the second plate body(236) is unfolded, another means for supporting the second side of the second plate body is necessary. Thus, predetermined fixing holes(235) caved in vertical direction should be formed on a second side of the first plate body(232) or an upper section of the first plate body, and a fixing bar(239) whose first section is vertically inserted/mounted into and on the fixing holes is comprised, thereby supporting the second side of the second plate body. At this time, the fixing bar(239) is formed such that an exposed second section thereof can be extended up to at least a certain height of the second plate body(236) while the fixing bar is inserted into the fixing holes(235). Desirably, after tying the fixing bar(239) to the second plate body(236), when the second plate body is unfolded, a first section of the fixing bar is inserted/mounted into and on the fixing holes, and when the second plate body is folded, the first section of the fixing bar is separated from the fixing holes. So, a coupling portion(237) including a hole pierced on the top and the bottom to insert the fixing bar(239) should be comprised on the second side of the second plate body(236). Besides, the fixing bar(239) is in '⊏' shape to stably support the second plate body(236), and the two fixing holes(235) spaced from each other at certain intervals are comprised.

The adjusting member(240,242) is inserted into the first insertion hole(233) of the first plate body(232) while a first section thereof is fixed to a lower side of the loading surface(212), and finely adjusts a horizontal position of the plate body. The adjusting member includes: the adjusting pipe(242) configured in pipe shape, and in which both sections thereof are pierced through, then being mounted on said first insertion hole(233); and the adjusting bar(240) configured in long bar shape, and inserted into said adjusting pipe(242) while a first section thereof is fixed to a lower side of the loading surface(212). The adjusting pipe(242) is pierced inside, being in pipe shape where both sections thereof are open, and is inserted/tied to said first insertion hole(233). Furthermore, the adjusting pipe can rotate only along the insertion hole without moving in horizontal direction while being tied to the first insertion hole, by making both sections of the adjusting pipe which are exposed to both sections of the first plate(232) bigger than the first insertion hole(233). A screw groove(242a) is formed on an inner side of the adjusting pipe(242). And, the adjusting bar(240) is inserted and tied to the adjusting pipe(242) while a first section thereof is fixed to the lower side of the loading surface(212), and is formed with a screw groove(240a) coupled to the screw groove(242a) of the adjusting pipe along an outer circumference. Accordingly, since the screw groove(242a) of the adjusting pipe(242) is engaged with the screw groove(240a) of the adjusting bar(240), the adjusting bar finely moves on the right and the left along the screw grooves by the adjusting pipe being turned, and the first plate body(232) also moves on the right and the left.

The supporting members(244) are in long bar shape, and are inserted into the second insertion holes(234) of the first plate body(232) while the first sections thereof is fixed to the lower side of the loading surface(212). The circumference of the supporting members(244) is a smooth surface where another screw grooves are not formed, and inner sides of the second insertion holes(234) are also smooth. Therefore, the supporting members can function as horizontal mobile shafts without generating any resistance from right/left movements of the first plate body(232). So, the first plate body(232) can maintain a parallel state with the lower side of the loading surface(212) without shaking even when the body moves in horizontal direction by the supporting members(244).

A process for loading and carrying the flat display glasses(220) by using another embodiment(200) of the packing container for flat display glass will be described below.

First, the flat display glasses(220) to be carried are located on the loading frame(21 0). Like shown above, it is possible to inject separation materials between the loaded flat display glasses(220), and to load reinforcing material in front of the loaded flat display glasses. While the flat display glasses(220) are loaded, the right/left side doors(256) slide backwards to be open, and the second plate body(236) of the right/left alignments(230) is pulled back outside the loading frame. Thus, it can easily load the flat display glasses(220) through a side of the loading frame(21 0) as well as a front side thereof.

When the flat display glasses(220) are completely loaded, both sides of the loaded flat display glasses are fixed by finely adjusting right/left positions of the right/left alignments(230) after unfolding the second plate body(236) of the right/left alignments(230) to insert the fixing bar(239) into the fixing holes(235) and supporting the second side of the second plate body. Concretely, when the adjusting pipe(242) is turned in certain direction(ex: clockwise direction), the screw grooves(240a,242a) of the adjusting pipe and the adjusting bar(240) are engaged with each other such that the adjusting pipe can move in a direction of the loading surface(212) along the adjusting bar, and the first plate body(232) tied with the adjusting pipe also moves in the direction of the loading surface. Ultimately, the second plate body(236) fixed to the first plate body(232) is closely adhered to one side of the flat display glasses(220). Since the first plate body(232) and the second plate body(236) move by the screw grooves(240a,242a) of the adjusting pipe and the adjusting bar, their horizontal positions can be finely adjusted, thereby being perfectly adhered to the one side of the flat display glasses(220). Furthermore, it can prevent shock or excessive pressure from being applied to the flat display glasses during an adjustment of the alignments(230). Like mentioned above, in case another flat glass fixing device is comprised except the alignments, the loaded flat display glasses are fixed by using the fixing device.

When the right/left side doors(256) are pulled forward after the flat display glasses(220) are completely loaded while the alignments(230) are fully adjusted, the right/left side doors move forward along first rail portions(216) and second rail portions(218), then shut a side area of the loading frame(210). On this occasion, the upper door(254) fixed on upper ends of the right/left side doors(256) also move forward along the side doors, and shut an upper surface area of the loading frame(210). Next, a front surface area of the loading frame(210) is shut by unfolding each door part of the right/left front doors(252) overlapped with the side doors(256). If another locking means for coupling the right/left front doors is comprised, the right/left front doors are reciprocally coupled by using the locking means.

When the flat display glasses(220) are completely loaded and packed, the packing container(200) for the flat display glasses is carried to a carrying place.

Also, in order to unload the loaded flat display glasses(220) after carrying them, first, locking means of the front doors(252) are unlocked, then each door part of the right/left front doors is sequentially folded to the outside from the inside, thereby opening the front surface area of the loading frame(210). Next, the front surface area of the loading frame(210) is perfectly opened by folding the door parts of the folded right/left front doors(252) on the right/left side doors(256). Pushing the side doors(256) backward after the door parts of the front doors(252) is folded on the side doors(256), the right/left side doors slide backwards along the first rail portions(216) and the second rail portions(218), thereby opening the side area of the loading frame(210). In this case, the upper door(254) also move backwards along the side doors(256), opening the upper surface area of the loading frame as well.

Then, when the adjusting pipe(242) of the right/left alignments(230) is turned in opposite direction(ex: counterclockwise direction), the screw grooves(240a,242a) of the adjusting pipe and the adjusting bar(240) are engaged with each other, so that the adjusting pipe moves outside the loading frame(210) along the adjusting bar. At this time, because the first plate body(232) is tied to the adjusting pipe(242), it moves outside the loading frame(210) along the adjusting pipe, and the second plate body(236) connected to the first plate body also moves outside the loading frame. Then, the second plate body(236) is pulled back outside the loading frame after lifting up the fixing bar(239) inserted into the fixing holes(235).
Finally, the flat display glasses(220) are unloaded one by one after taking out the reinforcing materials. Like mentioned so far, the side area of the loading frame(210) as well as the front surface area thereof can be perfectly opened without the right/left alignments(230). Therefore, it is possible to freely load and unload the flat display glasses from the front surface or the side of the loading frame.

### [Effect of the Invention]

Like mentioned so far, a packing container for flat display glass in accordance with the present invention can prevent flat display glasses from being damaged or broken by fixing and supporting both sides of the loaded flat display glasses with alignments to prevent the flat display glasses from being inclined while being carried.

That is, the packing container for flat display glass in accordance with the present invention is configured as follows: first, it can prevent the flat display glasses from being inclined to one side or a side arranged state from being deviated owing to an outer vibration or shock while carrying, by maintaining the side arranged state of the flat display glasses with the use of the right/left alignments; second, since it is possible to finely adjust horizontal positions of the alignments with screw grooves, the alignments can be perfectly adhered to one side of the flat display glasses while preventing excessive pressure or shock from being applied to the flat display glasses; third, in an embodiment of configuring an opening/shutting member in door type, each alignment can be folded in outer direction of a loading frame, thereby freely loading or unloading the flat display glasses from a side area of the loading frame as well as from a front surface thereof; finally, there are various modifications for applying a rolling shutter or a door as the opening/shutting member.

While the present invention has been described in connection with a number of embodiments and implementations, the present invention is not so limited but covers various obvious modifications and equivalent arrangements, which fall within the purview of the appended claims.

## Claims

1. A packing container for flat display glass to vertically load and pack plural flat display glasses, comprises:
a loading frame, said loading frame loading said flat display glasses; and wherein said loading frame comprises:
a loading surface (112), said loading surface (112) supporting lower ends of each loaded flat display glass;
a backplate surface (114), said backplate surface (114) formed in a rear section of the loading surface (112) to be vertical to said loading surface (112), and said backplate surface (114) supporting rear sides of flat display glasses;
right/left sidewalls (116), said right/left sidewalls(116) configured to connect both side ends of said backplate surface (114) and said loading surface (112); the packing container being **characterised by:**
*a first insertion hole (137), said first insertion hole (137) being pierced on said right*/*left sidewalls (116) in predetermined diameter,*
*right*/*left alignments (130), said right*/*left alignments (130) disposed on inner sides of said right*/*left sidewalls (116), and said right*/*left alignments (130) having a first lever (136), and said first lever (136) **being inserted into** said first insertion hole (137), and said right*/*left alignments fixing and supporting both sides of said loaded flat display glasses by controlling horizontal positions of said right*/*left alignments, and horizontal positions of said right*/left alignments being controlled by rotating said first lever (136) **through said first insertion hole (137)**, and
an opening/shutting member (140), said opening/shutting member (140) opening and shutting an open upper surface area and an open front surface area of said loading frame.

2. The packing container of claim 1, wherein each alignment (130) comprises:
a plate body (132), said plate body (132) configured in flat plate shape, and a first side of said plate body being closely adhered to one side of said flat display glasses (120) while maintaining a parallel state between said plate body (132) and said right/left sidewalls (116); and
an adjusting member, said adjusting member fixed to a second side of said plate body (132), said second side of said plate body (132) being an opposite side to said first side of said plate body, and said adjusting member finely adjusting a horizontal position of said plate body.

3. The packing container of claim 2, wherein said adjusting member comprises:
a first bar(134), said first bar(134) configured in long bar shape, and a first section of said first bar being fixed to said second,side of said plate body; and
a second bar(135), said second bar(135) configured in long bar shape, a first section of said second bar being coupled with an unfixed second section of said first bar, and a second section of said second bar being tied to said right/left sidewalls(116) in engaged type; and wherein
screw grooves(134a, 135a) are formed in a coupled part of said first bar(134) and said second bar(135), respectively.

4. The packing container of claim 3, wherein said adjusting member further comprises:
a first lever (136), one section of said first lever being inserted into said first insertion hole(137), one section of said first lever 136 being tied to said second section of said second bar(135), and said first lever(136) rotating said second bar(135) by transmitting a rotational force caused by an outer force to said second bar(135).

5. The packing container of claim 2, wherein each alignment(130) further comprises:
at least one supporting member(138, 139), first section of said supporting member(138, 139) being fixed to said second side of said plate body(132), second section of said supporting member(138,139) being tied to said inner sides of said right/left sidewalls(116), and said supporting member(138, 139) maintaining a parallel state between said plate body(132) and said right/left sidewalls(116) by said supporting member(138, 139) supporting said plate body(132).

6. The packing container of claim 5, wherein each supporting member 138, 139) comprises:
a supporting bar(138), said supporting bar configured in long bar shape, a first section of said supporting bar being fixed to said second side of the plate body(132); and
a supporting pipe(139), said supporting pipe(139) configured in pipe shape being pierced inside and both sections being open, an unfixed second section of said supporting bar(138) being inserted into an open first section of said supporting pipe(139), and a second section of said supporting pipe(139) being fixed to said inner side of said right/left sidewalls(116) while said second section of said supporting pipe(139) being spaced from said inner side of said right/left sidewalls(116) at certain intervals; and wherein
an entire length of said supporting member is varied while said supporting bar(132) moves in horizontal direction along said supporting pipe(139) according to the position of said finely adjusted plate body(132).

7. The packing container of claim 1, wherein said opening/shutting member(120) comprises:
plural rollers(146), said rollers(146) configured in cylinder shape, said rollers closely disposed to said inner sides of said right/left sidewalls(116) of said loading frame, and said rollers(146) being installed on an upper end and a lower end of said right/left sidewalls(116) in horizontal direction;
a series of right/left chains(144), said right/left chains(144) covering each roller(146) and said backplate surface(114) together, said right/left chains(144) being wound and fixed to a right section and a left section of each roller(146), respectively, and said right/left chains(144) vertically rotating by rotational forces of each roller(146); and
plural shutter plates(142), said shutter plates(142) configured in long piece shape, said shutter plates(142) being closely adhered to each other while both sections of each shutter plate(142) are fixed to the right/left chains(144), then said shutter plates(142) covering at least said open upper surface area and said open front surface area of said loading frame; and wherein
a pierced hole(118), said pierced hole being vertically pierced, such that said right/left chains(144) can pass through, is included in a front section of said loading surface(112).

8. The packing container of claim 7, wherein said opening/shutting member(120) further comprises:
a first gear(148), said first gear(148) comprised inside one sidewall of said loading frame, and said first gear(148) generating a vertical rotational force by receiving an outer force; and
a rotational force transmission member(150), said rotational force transmission member(150) interworking at least one of said rollers(146) with said first gear(148), and said rotational force transmission member(150) rotating said rollers(146) in vertical direction by said rotational force transmission member(150) transmitting said vertical rotational force of said first gear(148) to said rollers(146).

9. The packing container of claim 8, wherein said rotational force transmission member(150) comprises:
a second gear, said second gear being geared into said first gear(148), and said second gear converting said vertical rotational force of said first gear(148) into a horizontal rotational force; and
a third gear, said third gear being geared into said second gear, said third gear converting said horizontal rotational force of said second gear into a vertical rotational force, said third gear being geared with one of said rollers, and said third gear transmitting said vertical rotational force to said rollers.

10. The packing container of claim 8, wherein said rotational force transmission member(150) comprises a belt, said belt wound between one of said rollers(146) and said first gear to be fixed.

11. The packing container of claim 8, wherein said right%left sidewalls(116) comprise:
a second insertion hole(149), said second insertion hole(149) pierced on the right and the left in predetermined diameter on a horizontal extending line of said first gear(148); and wherein said opening/shutting member(140) further comprises:
a second lever, one section of said second lever being inserted into said second insertion hole(149), said one section of said second lever being tied to said first gear(148), and said second lever transmitting a rotational force caused by an outer force to said first gear(148).

## Patentansprüche

1. Verpackungsbehälter für flaches Displayglas zum vertikalen Aufladen und Verpacken von mehreren flachen Displaygläsern, der Folgendes umfasst:
ein Ladegestell, das die genannten flachen Displaygläser aufnimmt, wobei das genannte Ladegestell Folgendes umfasst:
eine Ladefläche (112), die untere Enden der jeweiligen aufgeladenen flachen Displaygläser trägt,
eine Rückplattenfläche (114), die in einem hinteren Teil der Ladefläche (112) so ausgebildet ist, dass sie zur genannten Ladefläche (112) vertikal ist, wobei die genannte Rückplattenfläche (114) Rückseiten flacher Displaygläser trägt,
rechte/linke Seitenwände (116), die so konfiguriert sind, dass sie beide Seitenenden der genannten Rückplattenfläche (114) und der genannten Ladefläche (112) verbinden, wobei der Verpackungsbehälter **dadurch gekennzeichnet ist, dass**:
ein erstes Einfügungsloch (137), wobei das erste Einfügungsloch in die rechten/linken Seitenwände (116) mit einem vorbestimmten Durchmesser gebohrt ist,
rechte/linke Ausrichtungsvorrichtungen (130), die sich auf Innenseiten der genannten rechten/linken Seitenwände (116) befinden, wobei die genannten rechten/linken Ausrichtungsvorrichtungen (130) einen ersten Hebel (136) haben, wobei der genannte erste Hebel (136) in das erste Einfügungsloch (137) eingesetzt ist und die genannten rechten/linken Ausrichtungsvorrichtungen beide Seiten der genannten aufgeladenen flachen Displaygläser fixieren und stützen, indem horizontale Positionen der genannten rechten/linken Ausrichtungsvorrichtungen reguliert werden, wobei die horizontalen Positionen der genannten rechten/linken Ausrichtungsvorrichtungen durch Drehen des genannten ersten Hebels (136) durch das erste Einfügungsloch reguliert werden, und
ein Öffnungs-/Schließelement (140), das einen offenen oberen Oberflächenbereich und einen offenen vorderen Oberflächenbereich des genannten Ladegestells öffnet und schließt.

2. Verpackungsbehälter nach Anspruch 1, wobei jede Ausrichtungsvorrichtung (130) Folgendes umfasst:
einen Plattenkörper (132), der eine flache Plattengestalt aufweist, wobei eine erste Seite des genannten Plattenkörpers eng an einer Seite der genannten flachen Displaygläser (120) anliegt, während gleichzeitig ein Parallelzustand zwischen dem genannten Plattenkörper (132) und den genannten rechten/linken Seitenwänden (116) beibehalten wird, und
ein Einstellelement, das an einer zweiten Seite des genannten Plattenkörpers (132) befestigt ist, wobei die genannte zweite Seite des genannten Plattenkörpers (132) eine zur genannten ersten Seite des genannten Plattenkörpers entgegengesetzte Seite ist und das genannte Einstellelement eine horizontale Position des genannten Plattenkörpers fein einstellt.

3. Verpackungsbehälter nach Anspruch 2, wobei das genannte Einstellelement Folgendes umfasst:
einen ersten Stab (134), der eine Stangenform hat, wobei ein erster Teil des genannten ersten Stabs an der genannten zweiten Seite des genannten Plattenkörpers befestigt ist, und
einen zweiten Stab (135), der eine Stangenform hat, wobei ein erster Teil des genannten zweiten Stabs mit einem unbefestigten zweiten Teil des genannten ersten Stabs gekoppelt ist und ein zweiter Teil des genannten zweiten Stabs mit den genannten rechten/linken Seitenwänden (116) im Eingriff verbunden ist; und wobei
Schraubenrillen (134a, 135a) jeweils in einem gekoppelten Stück des genannten ersten Stabs (134) und des genannten zweiten Stabs (135) ausgebildet sind.

4. Verpackungsbehälter nach Anspruch 3, wobei das genannte Einstellelement ferner einen ersten Hebel (136) umfasst, wobei ein Teil des genannten ersten Hebels in das genannte erste Einfügungsloch (136) eingefügt ist, wobei ein Teil des genannten ersten Hebels (137) mit dem genannten zweiten Teil des genannten zweiten Stabs (135) verbunden ist und der genannte erste Hebel (136) den genannten zweiten Stab (135) in Drehung versetzt, indem eine durch eine äußere Kraft verursachte Rotationskraft auf den genannten zweiten Stab (135) übertragen wird.

5. Verpackungsbehälter nach Anspruch 2, wobei jede Ausrichtungsvorrichtung (130) ferner wenigstens ein Tragelement (138, 139) umfasst, wobei der erste Teil des genannten Tragelements (138, 139) an der genannten zweiten Seite des genannten Plattenkörpers (132) befestigt ist, der zweite Teil des genannten Tragelements (138, 139) mit der genannten Innenseite der genannten rechten/linken Seitenwände (116) verbunden ist und das genannte Tragelement (138, 139) einen Parallelzustand zwischen dem genannten Plattenkörper (132) und den genannten rechten/linken Seitenwänden (116) beibehält, indem das genannte Tragelement (138, 139) den genannten Plattenkörper (132) trägt.

6. Verpackungsbehälter nach Anspruch 5, wobei jedes Tragelement (138, 139) Folgendes umfasst:
einen Tragstab (138), der eine Stangenform aufweist, wobei ein erster Teil des genannten Tragstabs an der genannten zweiten Seite des Plattenkörpers (132) befestigt ist, und
eine Tragröhre (139), wobei die eine Röhrenform aufweisende genannte Tragröhre (139) innen durchbohrt ist, wobei beide Teile offen sind, wobei ein unbefestigter zweiter Teil des genannten Tragstabs (138) in einen offenen ersten Teil der genannten Tragröhre (139) eingefügt ist und ein zweiter Teil der genannten Tragröhre (139) so an der genannten Innenseite der genannten rechten/linken Seitenwände (116) befestigt ist, dass der genannte zweite Teil der genannten Tragröhre (139) von der genannten Innenseite der genannten rechten/linken Seitenwände (116) in bestimmten Abständen beabstandet ist, und wobei
eine komplette Länge des genannten Tragelements variiert wird, während sich der genannte Tragstab (132) in horizontaler Richtung entlang der genannten Tragröhre (139) entsprechend der Position des genannten fein eingestellten Plattenkörpers (132) bewegt.

7. Verpackungsbehälter nach Anspruch 1, wobei das genannte Öffnungs-/Schließelement (120) Folgendes umfasst:
mehrere Rollen (146), die eine Zylinderform aufweisen, wobei sich die genannten Rollen nahe an den genannten Innenseiten der genannten rechten/linken Seitenwände (116) des genannten Ladegestells befinden, wobei die genannten Rollen (146) an einem oberen Ende und einem unteren Ende der genannten rechten/linken Seitenwände (116) in horizontaler Richtung montiert sind,
eine Reihe rechter/linker Ketten (144), wobei die genannten rechten/linken Ketten (144) zusammen die jeweiligen Rollen (146) und die genannte Rückplattenfläche (114) abdecken, wobei die genannten rechten/linken Ketten (144) um jeweils einen rechten Teil und einen linken Teil der jeweiligen Rollen (146) gewickelt und daran befestigt sind, wobei die genannten rechten/linken Ketten (144) durch Drehkräfte der jeweiligen Rollen (146) vertikal in Drehung versetzt werden, und
mehrere Verschlussplatten (142), die eine Stangenform aufweisen, wobei die genannten Verschlussplatten (142) eng aneinander anliegen, während beide Teile der jeweiligen Verschlussplatten (142) an den rechten/linken Ketten (144) befestigt sind, wobei die genannten Verschlussplatten (142) folglich wenigstens den genannten offenen oberen Oberflächenbereich und den genannten offenen vorderen Oberflächenbereich des genannten Ladegestells bedecken; und wobei
ein gebohrtes Loch (118), das vertikal gebohrt ist, so dass die genannten rechten/linken Ketten (144) durchlaufen können, in einem vorderen Teil der genannten Ladefläche (112) enthalten ist.

8. Verpackungsbehälter nach Anspruch 7, wobei das genannte Öffnungs-/Verschlusselement (120) ferner Folgendes umfasst:
ein erstes Zahnrad (148), das sich innerhalb einer Seitenwand des genannten Ladegestells befindet, wobei das genannte erste Zahnrad (148) eine vertikale Drehkraft durch den Empfang einer äußeren Kraft erzeugt, und
ein Drehkraftübertragungselement (150), das wenigstens eine der genannten Rollen (146) mit dem genannten ersten Zahnrad (148) zusammenwirken lässt, wobei das genannte Drehkraftüberträgungselement (150) die genannten Rollen (146) in vertikaler Richtung in Drehung versetzt, indem das Drehkraftübertragungselement (150) die genannte vertikale Drehkraft des genannten ersten Zahnrads (148) auf die genannten Rollen (146) überträgt.

9. Verpackungsbehälter nach Anspruch 8, wobei das genannte Drehkraftübertragungselement (150) Folgendes umfasst:
ein zweites Zahnrad, das in das genannte erste Zahnrad (148) eingreift, wobei das genannte zweite Zahnrad die genannte vertikale Drehkraft des genannten ersten Zahnrads (148) in eine horizontale Drehkraft umwandelt, und
ein drittes Zahnrad, das in das genannte zweite Zahnrad eingreift, wobei das genannte dritte Zahnrad die genannte horizontale Drehkraft des genannten zweiten Zahnrads in eine vertikale Drehkraft umwandelt, wobei das genannte dritte Zahnrad mit einer der genannten Rollen in Eingriff ist, wobei das genannte dritte Zahnrad die genannte vertikale Drehkraft auf die genannten Rollen überträgt.

10. Verpackungsbehälter nach Anspruch 8, wobei das genannte Drehkraftübertragungselement (150) einen Riemen umfasst, der zum Befestigen zwischen einer der genannten Rollen (146) und dem genannten ersten Zahnrad gewickelt ist.

11. Verpackungsbehälter nach Anspruch 8, wobei die genannten rechten/linken Seitenwände (116) Folgendes umfassen:
ein zweites Einfügungsloch (149), das rechts und links mit einem vorbestimmten Durchmesser auf einer horizontal verlaufenden Linie des genannten ersten Zahnrads (148) gebohrt ist, wobei das genannte Öffnungs-/Schließelement (140) ferner Folgendes umfasst:
einen zweiten Hebel, wobei ein Teil des genannten zweiten Hebels in das genannte zweite Einfügungsloch (149) eingefügt ist, wobei der genannte eine Teil des genannten zweiten Hebels mit dem genannten ersten Zahnrad (148) verbunden ist und der genannte zweite Hebel eine durch eine äußere Kraft verursachte Drehkraft auf das genannte erste Zahnrad (148) überträgt.

## Revendications

1. Réceptacle d'emballage pour dalle d'écran plat pour charger verticalement et emballer plusieurs dalles d'écran plat, comprenant :
un cadre de chargement, ledit cadre de chargement chargeant lesdites dalles d'écran plat ; et ledit cadre de chargement comprenant :
une surface de chargement (112), ladite surface de chargement (112) soutenant les extrémités inférieures de chaque dalle d'écran plat chargée ;
une surface de plaque d'appui (114), ladite surface de plaque d'appui (114) étant formée dans une section arrière de la surface de chargement (112) pour être verticale par rapport à ladite surface de chargement (112), et ladite surface de plaque d'appui (114) soutenant les côtés arrière des dalles d'écran plat ;
des parois latérales (116) gauche/droite, lesdites parois latérales (116) gauche/droite étant configurées pour relier les deux extrémités latérales de ladite surface de plaque d'appui (114) et de ladite surface de chargement (112) ; le réceptacle d'emballage étant **caractérisé par** :
un premier trou d'insertion (137), ledit premier trou d'insertion (137) étant percé d'un diamètre prédéterminé sur lesdites parois latérales (116) gauche/droite ;
des alignements (130) gauche/droit, lesdits alignements (130) gauche/droit étant disposés sur les côtés intérieurs desdites parois latérales (116) gauche/droite, et lesdits alignements (130) gauche/droit ayant un premier levier (136), et ledit premier levier (136) étant inséré dans le premier trou d'insertion (137), et lesdits alignements gauche/droit fixant et soutenant les deux côtés desdites dalles d'écran plat chargées en contrôlant les positions horizontales desdits alignements gauche/droit, et les positions horizontales desdits alignements gauche/droit étant commandées à travers ledit premier trou d'insertion (137) par rotation dudit premier levier (136) ; et
un élément d'ouverture/fermeture (140), ledit élément d'ouverture/fermeture (140) ouvrant et fermant une zone superficielle supérieure ouverte et une zone superficielle avant ouverte dudit cadre de chargement.

2. Réceptacle d'emballage selon la revendication 1, dans lequel chaque alignement (130) comprend :
un corps de plaque (132), ledit corps de plaque (132) prenant une forme de plaque plate et un premier côté dudit corps de plaque étant étroitement adhéré à un côté desdites dalles d'écran plat (120) tout en maintenant un état parallèle entre ledit corps de plaque (132) et lesdites parois latérales (116) gauche/droite ; et
un élément de réglage, ledit élément de réglage étant fixé à un deuxième côté dudit corps de plaque (132), ledit deuxième côté dudit corps de plaque (132) étant un côté opposé audit premier côté dudit corps de plaque, et ledit élément de réglage effectuant un réglage précis d'une position horizontale dudit corps de plaque.

3. Réceptacle d'emballage selon la revendication 2, dans lequel ledit élément de réglage comprend :
une première barre (134), ladite première barre (134) prenant une forme de barre en longueur, et une première section de ladite première barre étant fixée audit deuxième côté dudit corps de plaque ; et
une deuxième barre (135), ladite deuxième barre (135) prenant une forme de barre en longueur, une première section de ladite deuxième barre étant couplée à une deuxième section non fixée de ladite première barre, et une deuxième section de ladite deuxième barre étant reliée auxdites parois latérales (116) gauche/droite de façon emboîtée ; et dans lequel
des rainures filetées (134a, 135a) sont formées dans une partie couplée de ladite première barre (134) et de ladite deuxième barre (135), respectivement.

4. Réceptacle d'emballage selon la revendication 3, dans lequel ledit élément de réglage comprend en outre :
un premier levier (136), une section dudit premier levier étant insérée dans ledit premier trou d'insertion (137), une section dudit premier levier (136) étant reliée à ladite deuxième section de ladite deuxième barre (135), et ledit premier levier (136) faisant tourner ladite deuxième barre (135) en transmettant une force de rotation provoquée par une force extérieure à ladite deuxième barre (135).

5. Réceptacle d'emballage selon la revendication 2, dans lequel chaque alignement (130) comprend en outre :
au moins un élément de soutien (138, 139), la première section dudit élément de soutien (138, 139) étant fixée audit deuxième côté dudit corps de plaque (132), la deuxième section dudit élément de soutien (138, 139) étant reliée auxdits côtés intérieurs desdites parois latérales (116) gauche/droite, et ledit élément de soutien (138, 139) maintenant un état parallèle entre ledit corps de plaque (132) et lesdites parois latérales (116) gauche/droite du fait dudit élément de soutien (138, 139) soutenant ledit corps de plaque (132).

6. Réceptacle d'emballage selon la revendication 5, dans lequel chaque élément de soutien (138, 139) comprend :
une barre de soutien (138), ladite barre de soutien prenant une forme de barre en longueur, une première section de ladite barre de soutien étant fixée audit deuxième côté du corps de plaque (132) ; et
un tube de soutien (139), ledit tube de soutien (139) en forme de tube étant percé à l'intérieur et les deux sections étant ouvertes, une deuxième section non fixée de ladite barre de soutien (138) étant insérée dans une première section ouverte dudit tube de soutien (139) et une deuxième section dudit tube de soutien (139) étant fixée audit côté intérieur desdites parois latérales (116) gauche/droite tandis que ladite deuxième section dudit tube de soutien (139) est espacée dudit côté intérieur desdites parois latérales (116) gauche/droite à certains intervalles ; et dans lequel
une longueur entière dudit élément de soutien varie tandis que ladite barre de soutien (132) se déplace dans la direction horizontale le long dudit tube de soutien (139) en fonction de la position dudit corps de plaque (132) réglé de façon précise.

7. Réceptacle d'emballage selon la revendication 1, dans lequel ledit élément d'ouverture/fermeture (120) comprend :
plusieurs rouleaux (146), lesdits rouleaux (146) étant de forme cylindrique, lesdits rouleaux étant disposés à proximité desdits côtés intérieurs desdites parois latérales (116) gauche/droite dudit cadre de chargement et lesdits rouleaux (146) étant disposés sur une extrémité supérieure et une extrémité inférieure desdites parois latérales (116) gauche/droite dans la direction horizontale ;
une série de chaînes (144) gauche/droite, lesdites chaînes (144) gauche/droite couvrant ensemble chaque rouleau (146) et ladite surface de plaque d'appui (114), lesdites chaînes (144) gauche/droite étant enroulées et fixées à une section droite et à une section gauche de chaque rouleau (146), respectivement, et lesdites chaînes (144) gauche/droite tournant verticalement du fait des forces de rotation de chaque rouleau (146) ; et
plusieurs plaques de volet (142), lesdites plaques de volet (142) prenant la forme d'une pièce en longueur, lesdites plaques de volet (142) étant étroitement adhérées entre elles tandis que les deux sections de chaque plaque de volet (142) sont fixées aux chaînes (144) gauche/droite, puis lesdites plaques de volet (142) couvrant au moins ladite zone superficielle supérieure ouverte et ladite zone superficielle avant ouverte dudit cadre de chargement ; et
un trou percé (118), ledit trou percé étant percé verticalement, de sorte que lesdites chaînes (144) gauche/droite peuvent le traverser, y compris dans une section avant de ladite surface de chargement (112).

8. Réceptacle d'emballage selon la revendication 7, dans lequel ledit élément d'ouverture/fermeture (120) comprend en outre :
un premier engrenage (148), ledit premier engrenage (148) étant compris à l'intérieur d'une paroi latérale dudit cadre de chargement et ledit premier engrenage (148) générant une force de rotation verticale en recevant une force extérieure ; et
un élément de transmission de force de rotation (150), ledit élément de transmission de force de rotation (150) faisant interagir au moins un desdits rouleaux (146) avec ledit premier engrenage (148) et ledit élément de transmission de force de rotation (150) faisant tourner lesdits rouleaux (146) dans la direction verticale à l'aide dudit élément de transmission de force de rotation (150) transmettant ladite force de rotation verticale dudit premier engrenage (148) auxdits rouleaux (146).

9. Réceptacle d'emballage selon la revendication 8, dans lequel ledit élément de transmission de force de rotation (150) comprend :
un deuxième engrenage, ledit deuxième engrenage étant engrené dans ledit premier engrenage (148) et ledit deuxième engrenage convertissant ladite force de rotation verticale dudit premier engrenage (148) en une force de rotation horizontale ; et
un troisième engrenage, ledit troisième engrenage étant engrené dans ledit deuxième engrenage, ledit troisième engrenage convertissant ladite force de rotation horizontale dudit deuxième engrenage en une force de rotation verticale, ledit troisième engrenage étant engrené avec un desdits rouleaux et ledit troisième engrenage transmettant ladite force de rotation verticale auxdits rouleaux.

10. Réceptacle d'emballage selon la revendication 8, dans lequel ledit élément de transmission de force de rotation (150) comprend une sangle, ladite sangle étant enroulée entre un desdits rouleaux (146) et ledit premier engrenage à fixer.

11. Réceptacle d'emballage selon la revendication 8, dans lequel lesdites parois latérales (116) gauche/droite comprennent :
un deuxième trou d'insertion (149), ledit deuxième trou d'insertion (149) étant percé sur la gauche et la droite d'un diamètre prédéterminé sur une ligne s'étendant à l'horizontale dudit premier engrenage (148) ; et dans lequel ledit élément d'ouverture/fermeture (140) comprend en outre :
un deuxième levier, une section dudit deuxième levier étant insérée dans ledit deuxième trou d'insertion (149), ladite section dudit deuxième levier étant reliée audit premier engrenage (148), et ledit deuxième levier transmettant audit premier engrenage (148) une force de rotation engendrée par une force extérieure.
